# EUROPEAN PATENT APPLICATION

(11) **EP 2 595 235 A1**
(43) Date of publication of application: **22.05.2013**
(21) Application number: 11806751.1
(22) Date of filing: 11.07.2011
(51) Int. Cl.: H01M 10/058, H01M 4/13, H01M 10/0525, H01M 10/42

(54) **LITHIUM ION SECONDARY BATTERY, DEVICE FOR RECOVERING BATTERY CAPACITY AND METHOD FOR RECOVERING BATTERY CAPACITY**

(30) Priority: 29.06.2011 JP 2011144541; 29.06.2011 JP 2011144531; 21.09.2010 JP 2010210944; 16.07.2010 JP 2010161605
(71) Applicant: Nissan Motor Co., Ltd, Yokohama-shi, Kanagawa 221-0023 (JP)
(72) Inventor: SAITO, Takamitsu, Kanagawa 243-0123 (JP); SAKAGUCHI, Shinichiro, Kanagawa 243-0123 (JP); IWASAKI, Yasukazu, Kanagawa 243-0123 (JP); SAKAMOTO, Kazuyuki, Kanagawa 243-0123 (JP)
(74) Representative: Grünecker, Kinkeldey, Stockmair & Schwanhäusser
(86) International application number: PCT/JP2011/065817
(87) International publication number: WO 2012/008421

(57) **Abstract**

A lithium ion secondary battery includes: an outer covering material that is filled with an electrolyte; a collector that is housed in the outer covering material, formed with an electrode layer containing an active material, and electrically connected with the electrode layer; an insulation layer that is provided on the collector; and a low potential member that is provided on the insulation layer, has a lower oxidation reduction potential than the active material of the electrode layer, and possesses a reduction ability relative to the active material.

## Description

### TECHNICAL FIELD

This invention relates to a lithium ion secondary battery, a battery capacity recovery apparatus, and a battery capacity recovery method.

### BACKGROUND ART

When a secondary battery performs charging and discharging repeatedly, the battery deteriorates, leading to a reduction in a battery capacity thereof. Hence, in JP-H08-190934-A, a third electrode containing lithium is disposed in a battery. Power is then supplied to the third electrode from an external circuit. As a result, lithium ions are released from the third electrode, making it possible to compensate for a reduction in mobile lithium ions due to charging/discharging.

### SUMMARY OF INVENTION

In the prior art described above, however, the third electrode must be disposed in the battery, and therefore a structure of the battery becomes complicated.

This invention has been designed with a focus on this problem in the prior art, and an object thereof is to provide a lithium ion secondary battery, a battery capacity recovery apparatus, and a battery capacity recovery method with which a reduction in mobile lithium ions due to charging/discharging can be compensated for without complicating a battery structure.

An aspect of this invention provides a lithium ion secondary battery including an outer covering material that is filled with an electrolyte, and a collector that is housed in the outer covering material, formed with an electrode layer containing an active material, and electrically connected with the electrode layer. The lithium ion secondary battery further includes an insulation layer that is provided on the collector, and a low potential member that is provided on the insulation layer, has a lower oxidation reduction potential than the active material of the electrode layer, and possesses a reduction ability relative to the active material.

Embodiments and advantages of this invention will be described in detail below together with the attached figures.

### BRIEF DESCRIPTION OF DRAWINGS

FIG. 1 is a view showing an embodiment of a lithium ion secondary battery according to this invention.
FIG. 2 is a view showing an example of an electrode used in the lithium ion secondary battery according to this embodiment.
FIG. 3 is a view illustrating a method of recovering a battery capacity of the lithium ion secondary battery according to this invention.
FIG. 4 is a view showing another example of an electrode used in the lithium ion secondary battery according to this invention.
FIG. 5 is a view showing an example of a lithium ion secondary battery using a battery capacity recovery apparatus according to this invention.
FIG. 6 is a view showing a first embodiment of the battery capacity recovery apparatus according to this invention.
FIG. 7 is a view illustrating a method of recovering the battery capacity of the lithium ion secondary battery according to this invention.
FIG. 8 is a view showing a second embodiment of the battery capacity recovery apparatus according to this invention.

### DESCRIPTION OF EMBODIMENTS

### (Embodiment of lithium ion secondary battery according to this invention)

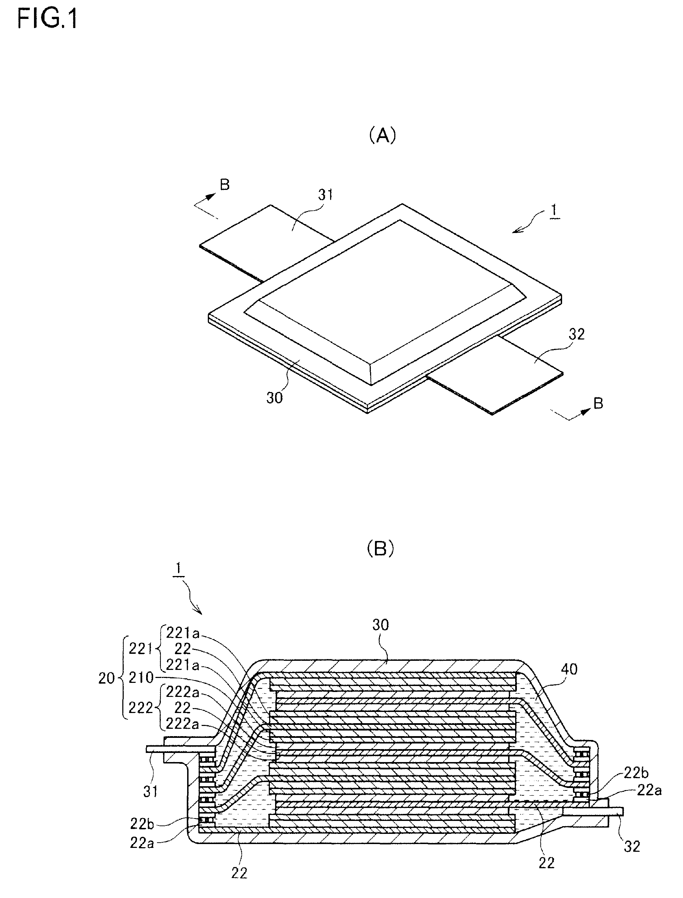

FIG. 1 is a view showing an embodiment of a lithium ion secondary battery according to this invention, wherein FIG. 1(A) is a perspective view of the lithium ion secondary battery and FIG. 1(B) is a B-B sectional view of FIG. 1(A).

A lithium ion secondary battery 1 includes cells 20 stacked in a predetermined number and electrically connected in parallel, and an outer covering material 30. The outer covering material 30 is filled with an electrolyte (electrolyte solution) 40.

The electrolyte (electrolyte solution) 40 is, for example, a gel electrolyte in which approximately several % by weight to 99% by weight of an electrolyte solution is supported by a polymer backbone. A polymer gel electrolyte is particularly preferable. In a polymer gel electrolyte, for example, an electrolyte solution used in a typical lithium ion battery is contained in a solid polymer electrolyte possessing ion conductivity. An electrolyte in which an electrolyte solution used in a typical lithium ion battery is supported by a polymer backbone not possessing lithium ion conductivity may also be used.

Any polymer gel electrolyte in which an electrolyte solution is contained in a polymer backbone, excluding an electrolyte made of 100% polymer electrolyte, may be used. A ratio (mass ratio) between the electrolyte solution and the polymer of approximately 20 : 80 to 98.2 is particularly preferable. With this ratio, both electrolyte fluidity and a sufficient electrolyte performance are secured.

The polymer backbone may be either a thermosetting polymer or a thermoplastic polymer. More specifically, for example, the polymer backbone is a polymer having polyethylene oxide on a main chain or a side chain (PEO), polyacrylonitrile (PAN), polyester methacrylate, polyvinylidene difluoride (PVDF), a copolymer of polyvinylidene difluoride and hexafluoropropylene (PVDF-HFP), polymethyl methacrylate (PMMA), and so on. It should be noted, however, that the polymer backbone is not limited thereto.

The electrolyte solution (electrolyte salt and a plasticizer) contained in the polymer gel electrolyte is an electrolyte solution used in a typical lithium ion battery. For example, the electrolyte solution is a cyclic carbonate such as propylene carbonate or ethylene carbonate containing at least one type of lithium salt (electrolyte salt) selected from inorganic acid anion salts such as LiPF₆, LiBF₄, LiClO₄, LiAsF₆, LiTaF6, LiAlCl₄, and Li₂B₁₀Cl₁₀ and organic acid anion salts such as LiCF₃SO₃, Li(CF₃SO₂)₂N, and Li(C₂F₅SO₂)₂N. A chain carbonate such as dimethyl carbonate, methylethyl carbonate, and diethyl carbonate may also be used. An ether such as tetrahydrofuran, 2-methyltetrahydrofuran, 1, 4-dioxane, 1, 2-dimethoxyethane, and 1, 2-dibutoxyethane may also be used. A lactone such as γ-butyrolactone may also be used. A nitrile such as acetonitrile may also be used. An ester such as methyl propionate may also be used. An amide such as dimethylformamide may also be used. The electrolyte solution may employ an organic solvent (a plasticizer) such as an aprotic solvent intermixed with at least one of methyl acetate and methyl formate. It should be noted, however, that the electrolyte solution is not limited thereto.

The cell 20 includes a separator 210, a positive electrode 221, and a negative electrode 222.

The separator 210 is an electrolyte layer supporting the fluid electrolyte (electrolyte solution) 40. The separator 210 is a nonwoven fabric such as polyamide nonwoven fabric, polyethylene nonwoven fabric, polypropylene nonwoven fabric, polyimide nonwoven fabric, polyester nonwoven fabric, or aramid nonwoven fabric. The separator 210 may also be a porous membrane film formed by stretching a film such that pores are formed therein. This type of film is used as a separator in existing lithium ion batteries. Further, the separator 210 may be a polyethylene film, a polypropylene film, a polyimide film, or a laminated film thereof. There are no particular limitations on a thickness of the separator 210. However, the separator 210 is preferably thin in order to achieve compactness in the battery. The separator 210 is therefore preferably as thin as possible within a range where a performance thereof can be secured. The thickness of the separator 210 is typically set between approximately 10 and 100µm. It should be noted, however, the thickness need not be constant.

The positive electrode 221 includes a thin plate-shaped collector 22 and positive electrode layers 221a formed on either surface thereof. It should be noted that in the positive electrode 221 disposed on an outermost layer, the positive electrode layer 221a is formed on only one surface of the collector 22. The positive electrode collectors 22 are gathered together and electrically connected in parallel. In FIG. 1(B), the respective collectors 22 are gathered together on a left side. This gathered part serves as a positive electrode collector unit.

The collector 22 is constituted by a conductive material. A size of the collector is determined according to a use application of the battery. For example, a collector having a large surface area is used for a large battery requiring high energy density. There are no particular limitations on a thickness of the collector. The thickness of the collector is typically set between approximately 1 and 100µm. There are no particular limitations on a shape of the collector. In the stacked battery 1 shown in FIG. 1(B), a collector foil shape, a mesh shape (an expanded grid or the like), and so on may be employed. In a case where a negative electrode active material is formed by forming a thin film alloy directly on a negative electrode collector using a sputtering method or the like, collector foil is preferably employed.

There are no particular limitations on a material constituting the collector. For example, a metal, or a resin in which a conductive filler is added to a conductive polymer material or a nonconductive polymer material may be employed. Specific examples of metals include aluminum, nickel, iron, stainless steel, titanium, and copper. Alternatively, a cladding material containing nickel and aluminum, a cladding material containing copper and aluminum, a plating material containing a combination of these metals, and so on may also be used favorably. Further, a foil formed by covering a metal surface with aluminum may be used. Of these materials, aluminum, stainless steel, copper, and nickel are preferable in terms of electron conductivity, battery operation potential, adhesion of the negative electrode active material to the collector through sputtering, and so on.

Further, polyaniline, polypyrrole, polythiophene, polyacetylene, poly-paraphenylene, poly-phenylenevinylene, polyacrylonitrile, polyoxadiazole, and so on may be cited as examples of conductive polymer materials. These conductive polymer materials have sufficient conductivity without the need to add a conductive filler, and are therefore advantageous in terms of simplifying a manufacturing process and reducing a weight of the collector.

Polyethylene (PE; high density polyethylene (HDPE), low density polyethylene (LDPE), and so on), polypropylene (PP), polyethylene terephthalate (PET), polyether nitrile (PEN), polyimide (PI), polyamide-imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene difluoride (PVdF), polystyrene (PS), and so on may be cited as examples of nonconductive polymer materials. With these nonconductive polymer materials, superior potential resistance and solvent resistance can be obtained.

If necessary, a conductive filler may be added to the conductive polymer materials and nonconductive polymer materials described above. In particular, when the resin serving as a base material of the collector is constituted by a nonconductive polymer alone, a conductive filler is essential to provide the resin with conductivity. Any conductive substance may be used as the conductive filler without limitations. A metal, a conductive carbon, and so on may be cited as examples of materials exhibiting superior conductivity and potential resistance and a superior lithium ion blocking property. There are no particular limitations on the metal, but the metal preferably includes at least one metal selected from a group including Ni, Ti, Al, Cu, Pt, Fe, Cr, Sn, Zn, In, Sb, and K, or an alloy or a metal oxide containing these metals. Further, there are no particular limitations on the conductive carbon, but a conductive carbon containing at least one material selected from a group including acetylene black, vulcan, black pearl, carbon nanofiber, ketjen black, carbon nanotubes, carbon nanohorns, carbon nanoballoons, and fullerene is preferably employed. There are no particular limitations on the amount of added conductive filler as long as the collector can be provided with sufficient conductivity, but typically an amount between approximately 5% and 35% by weight is added.

An insulation layer 22a and a low potential member 22a, which will be described below, are provided on an end edge of the collector 22.

The positive electrode layer 221a includes a positive electrode active material. The positive electrode active material is particularly preferably a lithium-transition metal compound oxide. Specific examples thereof include an Li/Mn-based compound oxide such as spinel LiMn₂O₄, an Li/Co-based compound oxide such as LiCoO₂, an Li/Ni-based compound oxide such as LiNiO₂, and an Li/Fe-based compound oxide such as LiFeO₂. A phosphate compound or a sulfate compound of a transition metal and lithium, such as LiFePO₄, may also be used. A transition metal oxide or sulfide such as V₂O₅, MnO₂, TiS₂, MoS₂, or MoO₃ may also be used. PbO₂, AgO, NiOOH, and so on may also be used. With these positive electrode active materials, a battery exhibiting a superior battery capacity and a superior output characteristic can be constructed.

A particle size of the positive electrode active material should be set such that the positive electrode material can be formed into a paste and a film can be formed by spray-coating the paste or the like. However, electrode resistance can be reduced with a small particle size. More specifically, an average particle size of the positive electrode active material is preferably set at 0.1 to 10µm.

To achieve an increase in ion conductivity, the positive electrode active material may also contain an electrolyte, lithium salt, a conduction aid, and so on. Acetylene black, carbon black, graphite, and so on may be cited as examples of conduction aids.

Blending amounts of the positive electrode active material, the electrolyte (preferably a solid polymer electrolyte), the lithium salt, and the conduction aid are set in consideration of an intended use (whether emphasis is to be placed on output, energy, or another consideration) and the ion conductivity of the battery. For example, when the blending amount of the electrolyte, in particular a solid polymer electrolyte, is too small, ion conduction resistance and ion diffusion resistance in the active material layer increases, leading to deterioration of the battery performance. When the blending amount of the electrolyte, in particular a solid polymer electrolyte, is too large, on the other hand, the energy density of the battery decreases. Specific blending amounts are therefore set in consideration of these points.

There are no particular limitations on a thickness of the positive electrode layer 221a, and the thickness is set in consideration of the intended use (whether emphasis is to be placed on output, energy, or another consideration), the ion conductivity, and so on of the battery. The thickness of a typical positive electrode is set between approximately 1 and 500µm.

The negative electrode 222 includes the thin plate-shaped collector 22 and negative electrode layers 222a formed on either surface thereof. It should be noted that in the negative electrode 222 disposed on the outermost layer, the negative electrode layer 222a is formed on only one surface of the collector 22. The negative electrode collectors 22 are gathered together and electrically connected in parallel. In FIG. 1(B), the respective collectors 22 are gathered together on a right side. This gathered part serves as a negative electrode collector unit. The collector 22 may be identical or different to the collector 22 used in the positive electrode.

The negative electrode layer 222a includes a negative electrode active material. More specifically, the negative electrode layer 222a is constituted by a metal oxide, a lithium-metal compound oxide metal, carbon, titanium oxide, a lithium-titanium compound oxide, or the like. Carbon, a transition metal oxide, and a lithium-transition metal compound oxide are particularly preferable. Of these materials, carbon or a lithium-transition metal compound oxide increase the battery capacity and the output of the battery. These materials may be used singly or in combinations of two or more.

The outer covering material 30 houses the stacked cells 20. The outer covering material 30 is formed from a sheet material made of a polymer-metal compound laminate film that is formed by covering a metal such as aluminum with an insulating body such as polypropylene film. A periphery of the outer covering material 30 is heat-sealed with the stacked cells 20 housed therein. The outer covering material 30 includes a positive electrode tab 31 and a negative electrode tab 32 for leading power from the cells 20 to the outside.

One end of the positive electrode tab 31 is connected to the positive electrode collector unit in the interior of the outer covering material 30, and another end projects to the outside of the outer covering material 30.
One end of the negative electrode tab 32 is connected to the negative electrode collector unit in the interior of the outer covering material 30, and another end projects to the outside of the outer covering material 30.

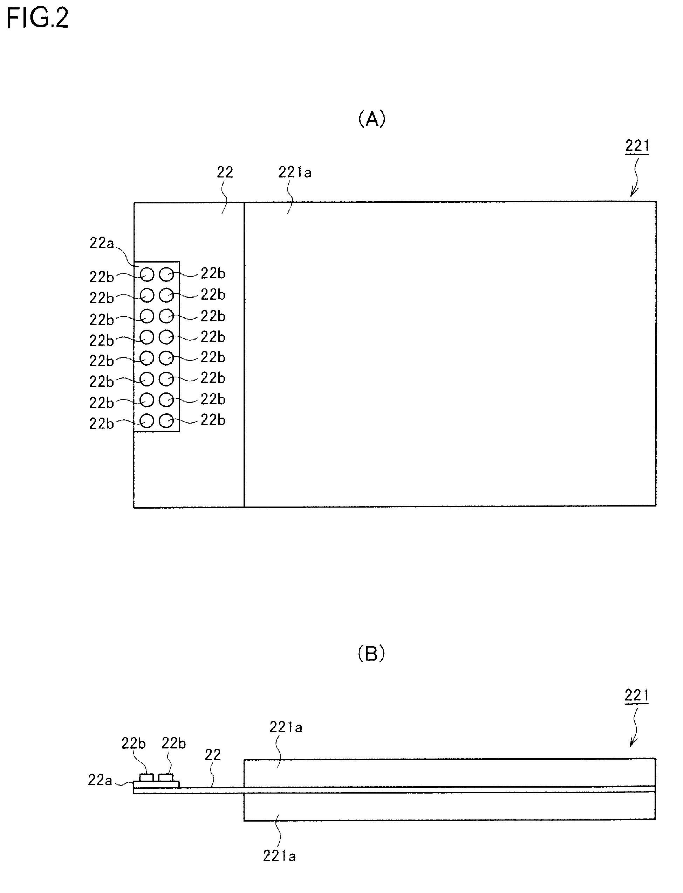

FIG. 2 is a view showing an example of an electrode used in the lithium ion secondary battery according to this embodiment, wherein FIG. 2(A) is a plan view and FIG. 2(B) is a side view.
It should be noted that here, the positive electrode 221 will be described as the electrode. However, the negative electrode 222 is similar.

The positive electrode 221 includes the collector 22, the positive electrode layers 221a, an insulation layer 22a, and a low potential member 22b.

The insulation layer 22a is provided on an end edge of the collector 22. As will be described below, the insulation layer 22a is flimsy enough to be crushed and break when the low potential member 22b is pressed.

The low potential member 22b is provided on the insulation layer 22a. The low potential member 22b is smaller than the insulation layer 22a. The small low potential member 22b is arranged in a plurality. In this embodiment, sixteen low potential members 22b, each of which is circular and smaller than the insulation layer 22a, are provided on the insulation layer 22a. The low potential member 22b has a lower oxidation reduction potential than the active material of the electrode layer (the positive electrode layer 221a) and possesses a reduction ability relative to the active material. The low potential member 22b also has a lower oxidation reduction potential than the collector 22 and possesses a reduction ability relative to the collector 22. In other words, the collector 22 has a higher oxidation reduction potential than the low potential member 22b. The low potential member 22b is lithium metal or a compound containing lithium, for example.

(Battery capacity recovery method for lithium ion secondary battery according to this invention)

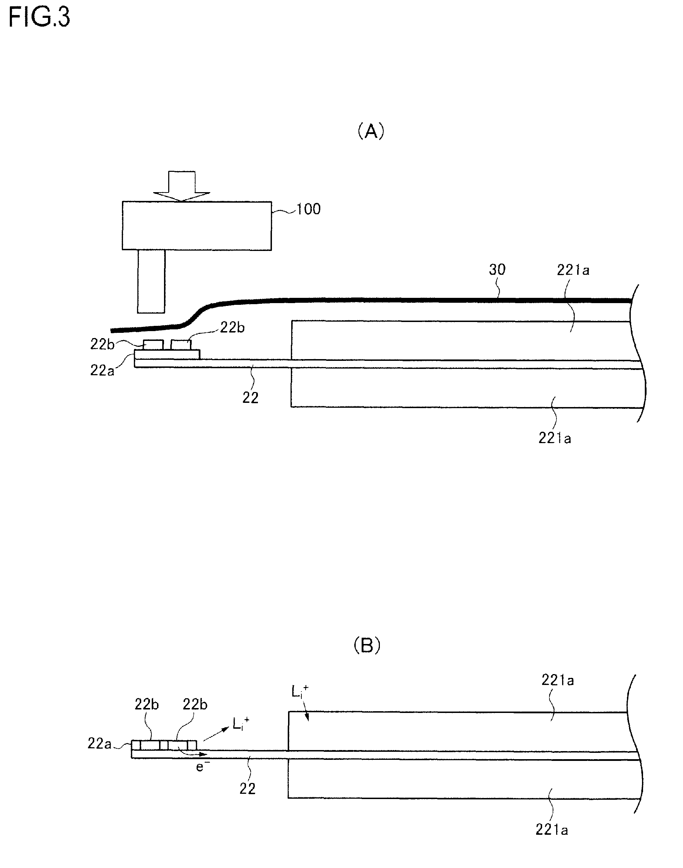

FIG. 3 is a view illustrating a method of recovering the battery capacity of the lithium ion secondary battery according to this invention, wherein FIG. 3(A) shows a specific recovery method and FIG. 3(B) shows a recovery mechanism.

Initially in the lithium ion secondary battery, the low potential members 22b are provided on the collector 22 via the insulation layer 22a (initial step #101).

A determination is then made as to whether or not the battery capacity of the battery has decreased such that recovery is required (determination step # 102). A degree of the reduction in the battery capacity may be estimated on the basis of a use time, a use history, a current value, a voltage value, and so on of the battery. A determination reference value for determining whether or not recovery is required is set in advance through experiment or the like.

When the battery capacity of the lithium ion secondary battery has decreased such that recovery of the battery capacity is required, the low potential member 22b is pressed using a pressing device 200, as shown in FIG. 3(A). As a result, as shown in FIG. 3(B), the low potential member 22b is embedded in the insulation layer 22a. The insulation layer 22b then breaks such that the low potential member 22b is short-circuited to the collector 22 (short-circuiting step # 103).

At this time, the low potential member 22b has a lower oxidation reduction potential than the active material of the electrode layer (the positive electrode layer 221a) and possesses a reduction ability relative to the active material. Therefore, cations (lithium ions Li⁺ in FIG. 3(B)) derived from the low potential member are released into the electrolyte, and electrons e⁻ flow to the collector 22. Further, proximal cations (lithium ions Li⁺ in FIG. 3(B)) originally existing in the electrolyte are taken into the positive electrode layer 221a formed on the collector 22. When cations move in this manner, it is possible to compensate for a reduction in mobile ions due to charging/discharging. It should be noted that the low potential member 22b has a lower oxidation reduction potential than the collector 22 and possesses a reduction ability relative to the collector 22. In other words, the collector 22 has a higher oxidation reduction potential than the low potential member 22b, and therefore a phenomenon whereby the collector 22 melts instead of the low potential member 22b does not occur.

Logically, if the oxidation reduction potential of the low potential member 22b is lower than the oxidation reduction potential of the active material of the electrode layer and the low potential member 22b possesses a reduction ability relative to the active material, cations are released into the electrolyte when the low potential member 22b is short-circuited to the collector 22, making it possible to compensate for a reduction in mobile ions. Depending on the type of cations, however, the cations may have an adverse effect on the electrode. Hence, in this embodiment, lithium metal or a compound containing lithium in particular is used as the low potential member 22b. Thus, when the low potential member 22b is short-circuited to the collector 22, lithium ions Li⁺ are released into the electrolyte as the cations. A reduction in mobile lithium ions caused by charging/discharging can be compensated for by the lithium ions Li⁺. Lithium ions Li⁺ originally exist in the electrolyte and do not therefore have an adverse effect. For this reason, the low potential member 22b is preferably lithium metal or a compound containing lithium. Lithium metal is particularly preferably in consideration of the energy density.

Further, in this embodiment, the low potential members 22b are smaller than the insulation layer 22a and arranged in a plurality. Therefore, the required number of low potential members 22b can be pressed in accordance with the degree of the reduction in battery capacity, or in other words the degree of the reduction in mobile lithium ions. As a result, a pointlessly excessive increase in mobile lithium ions can be prevented.

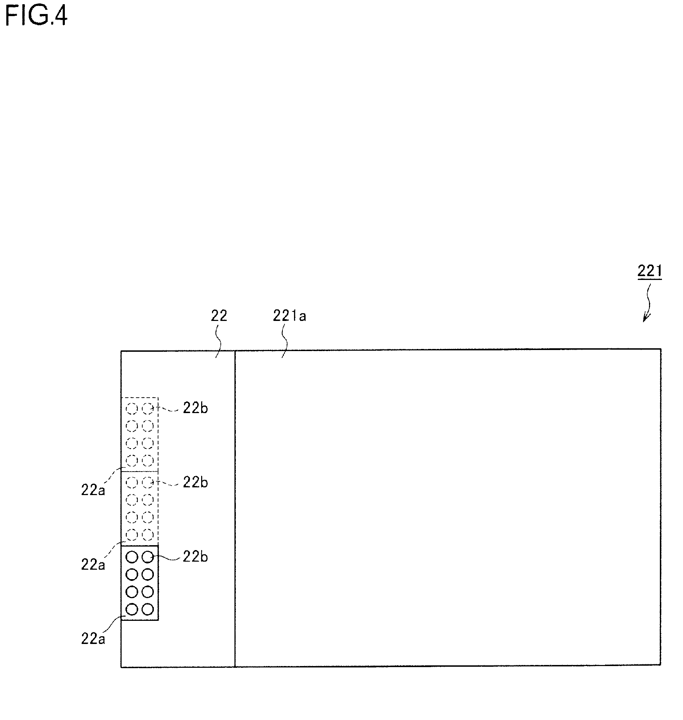

Furthermore, by shifting positions of the insulation layer 22a and the low potential members 22b on each stacked electrode 221, as shown in FIG. 4, the battery capacity can be recovered on each electrode 221.

### (First embodiment of battery capacity recovery apparatus according to this invention)

To facilitate comprehension of the battery capacity recovery apparatus according to this invention, first, a structure of a lithium ion secondary battery that uses the battery capacity recovery apparatus will be described. It should be noted that this secondary battery is a typical, conventional, widely known battery, and shares many configurations with the battery described above. Accordingly, parts that exhibit similar functions to the battery described above will be allocated identical reference symbols, and duplicate description thereof will be omitted where appropriate.

### (Structure of lithium ion secondary battery using battery capacity recovery apparatus according to this invention)

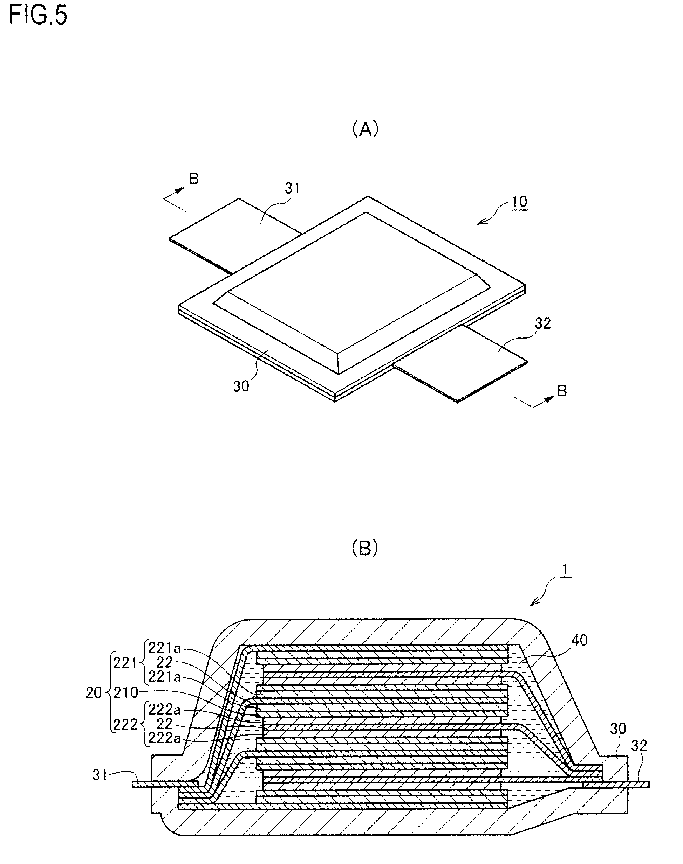

FIG. 5 is a view showing an example of a lithium ion secondary battery that uses the battery capacity recovery apparatus according to this invention, wherein FIG. 5(A) is a perspective view of the lithium ion secondary battery and FIG. 5(B) is a B-B sectional view of FIG. 5(A).

A lithium ion secondary battery 1 includes cells 20 stacked in a predetermined number and electrically connected in parallel, and an outer covering material 30. The outer covering material 30 is filled with an electrolyte (electrolyte solution) 40.

The cell 20 includes a separator 210, a positive electrode 221, and a negative electrode 222. Configurations thereof are identical to those of the battery described above. Hence, these parts will be described only briefly, and detailed description thereof will be omitted.

The separator 210 is an electrolyte layer supporting the fluid electrolyte (electrolyte solution) 40.

The positive electrode 221 includes a thin plate-shaped collector 22 and positive electrode layers 221a formed on either surface thereof. It should be noted that in the positive electrode 221 disposed on an outermost layer, the positive electrode layer 221a is formed on only one surface of the collector 22.

The positive electrode layer 221a includes a positive electrode active material.

The collector 22 is molded by heating a metal paste formed by mixing a binder (resin) and a solvent into a metal powder serving as a main component.

The negative electrode 222 includes the thin plate-shaped collector 22 and negative electrode layers 222a formed on either surface thereof. It should be noted that in the negative electrode 222 disposed on the outermost layer, the negative electrode layer 222a is formed on only one surface of the collector 22.

The negative electrode layer 222a includes a negative electrode active material.

The outer covering material 30 houses the stacked cells 20. The outer covering material 30 includes a positive electrode tab 31 and a negative electrode tab 32 for leading power from the cells 20 to the outside.

The electrolyte (electrolyte solution) 40 is identical to that of the battery described above.

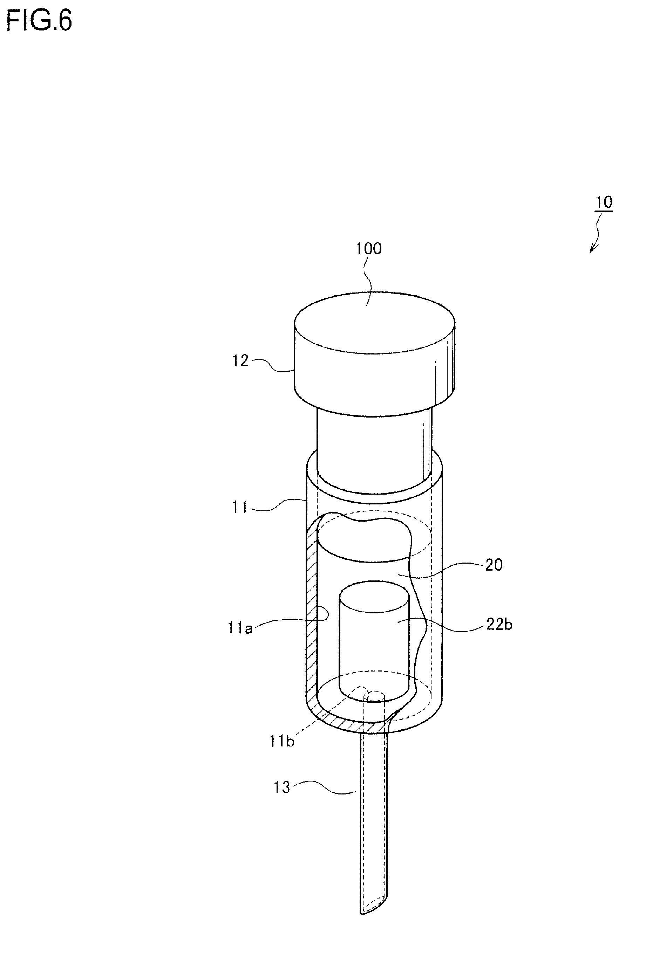

FIG. 6 is a view showing a first embodiment of the battery capacity recovery apparatus according to this invention.
A battery capacity recovery apparatus 100 is constituted by an injector 10. The injector 10 includes a cylinder 11, a plunger 12, and a nozzle 13.

The plunger 12 is inserted into the cylinder 11. A space formed by the cylinder 11 and the plunger 12 serves as a cylinder chamber 11a. A low potential member 22b is housed in the cylinder chamber 11a. The low potential member 22b will be described in detail below. Further, the cylinder chamber 11a is filled with the electrolyte 40.

The nozzle 13 is connected to a port 11b of the cylinder 11. The nozzle 13 is needle-shaped. The nozzle 13 is conductive.

The low potential member 22b contacts the nozzle 13 so as to be electrically connected thereto. The low potential member 22b has a lower oxidation reduction potential than the active material of either the positive electrode 221 or the negative electrode 222 of the lithium ion secondary battery 1, and possesses a reduction ability relative to the active material. Further, the low potential member 22b has a lower oxidation reduction potential than the collector 22 and possesses a reduction ability relative to the collector 22. In other words, the collector 22 has a higher oxidation reduction potential than the low potential member 22b. The low potential member 22b is formed from lithium metal or a compound containing lithium, or the like, for example.

### (Battery capacity recovery method for lithium ion secondary battery)

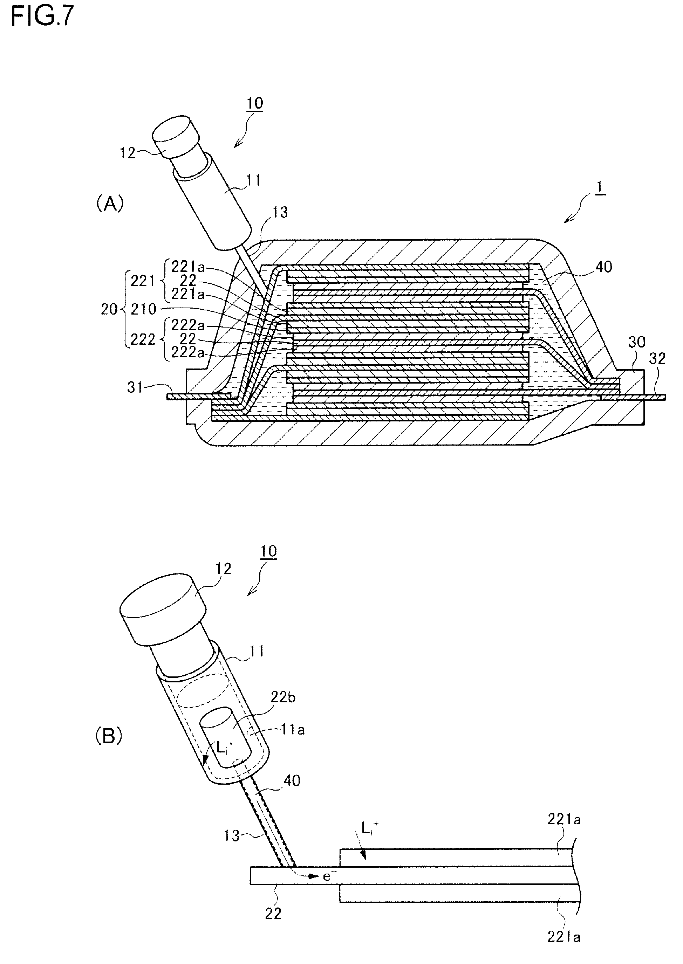

FIG. 7 is a view illustrating a method of recovering the battery capacity of the lithium ion secondary battery according to this invention, wherein FIG. 7(A) shows a specific recovery method and FIG. 7(B) shows a recovery mechanism.

Initially, the injector 10 is not injected into the lithium ion secondary battery (initial step #101).

A determination is then made as to whether or not the battery capacity of the battery has decreased such that recovery is required (determination step # 102). The degree of the reduction in the battery capacity may be estimated on the basis of the use time, the use history, the current value, the voltage value, and so on of the battery. Further, the determination reference value for determining whether or not recovery is required is set in advance through experiment or the like.

When the battery capacity of the lithium ion secondary battery has decreased such that recovery of the battery capacity is required, the nozzle 13 of the injector 10 is injected into and caused to penetrate the outer covering material 30 of the lithium ion secondary battery 1 such that the nozzle 13 of the injector 10 contacts the collector 22, as shown in FIG. 7(A). As a result, the low potential member 22b is electrically connected (short-circuited) to the collector 22 (short-circuiting step # 103).

The plunger 12 is then pressed. As a result, as shown in FIG. 7(B), the electrolyte 40 is ejected from a tip end of the nozzle 13 (electrolyte ejection step # 104). The electrolyte intermixes with the electrolyte filled into the outer covering material 30. It should be noted that when the electrolyte 40 filled into the cylinder chamber 11a takes the form of a gel, the electrolyte 40 reaches the collector 22 of the positive electrode in a stream.

If, at this time, the low potential member 22b is made of lithium metal, the low potential member (lithium metal) 22b has a lower oxidation reduction potential than the active material of the electrode layer (the positive electrode layer 221a) and possesses a reduction ability relative to the active material of the electrode layer (the positive electrode layer 221a). Therefore, cations (lithium ions Li⁺ in FIG. 7(B)) derived from the low potential member are released into the electrolyte, and electrons e⁻ flow to the collector 22. Further, proximal cations (lithium ions Li⁺ in FIG. 7(B)) originally existing in the electrolyte are taken into the positive electrode layer 221a formed on the collector 22. When cations move in this manner, it is possible to compensate for a reduction in mobile ions due to charging/discharging. It should be noted that the low potential member 22b has a lower oxidation reduction potential than the collector 22 and possesses a reduction ability relative to the collector 22. In other words, the collector 22 has a higher oxidation reduction potential than the low potential member 22b, and therefore a phenomenon whereby the collector 22 melts instead of the low potential member 22b does not occur.

Logically, if the oxidation reduction potential of the low potential member 22b is lower than the oxidation reduction potential of the active material of the electrode layer and the low potential member 22b possesses a reduction ability relative to the active material, cations are released into the electrolyte when the low potential member 22b is short-circuited to the collector 22 such that the electrolyte (electrolyte solution) 40 in the cylinder chamber 11a of the injector 10 and the electrolyte (electrolyte solution) 40 filled into the outer covering material 30 form a liquid junction, and as a result, it is possible to compensate for the mobile ions. Depending on the type of cations, however, the cations may have an adverse effect on the electrode. Hence, in this embodiment, lithium metal in particular is used as the low potential member 22b. Accordingly, when the low potential member 22b is short-circuited to the collector 22 and the electrolyte (electrolyte solution) 40 in the cylinder chamber 11a of the injector 10 forms a liquid junction with the electrolyte (electrolyte solution) 40 filled into the outer covering material 30, lithium ions Li⁺ are released into the electrolyte as the cations. A reduction in mobile lithium ions caused by charging/discharging can be compensated for by the lithium ions Li⁺. Lithium ions Li⁺ originally exist in the electrolyte and do not therefore have an adverse effect. Further, when lithium metal is used, a superior energy density can be obtained, and therefore lithium metal is preferable.

### (Second embodiment of battery capacity recovery apparatus according to this invention)

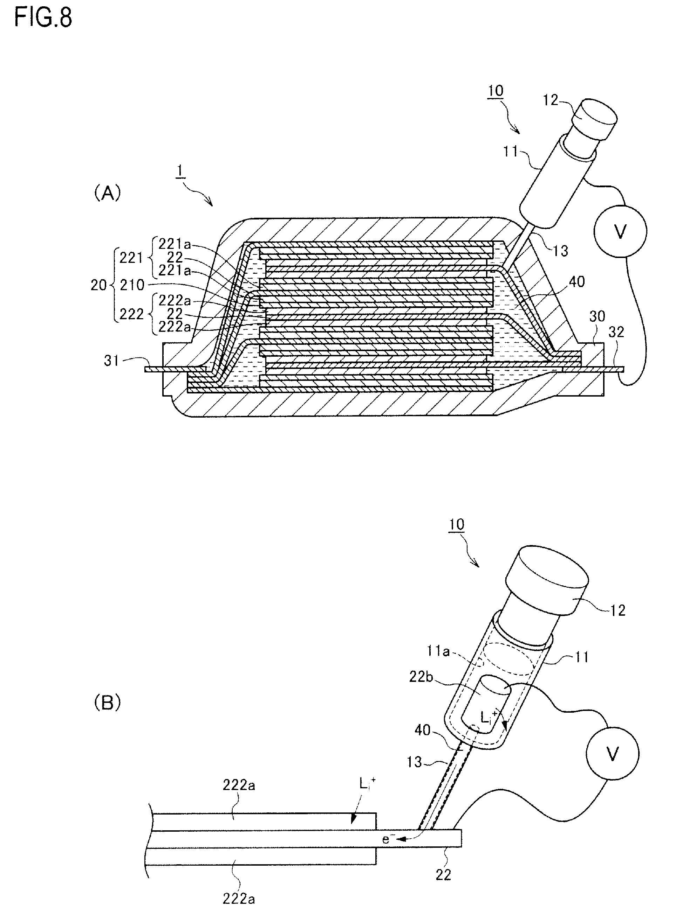

FIG. 8 is a view showing a second embodiment of the battery capacity recovery apparatus according to this invention.
In the following description, parts that exhibit similar functions to those described above will be allocated identical reference symbols, and duplicate description thereof will be omitted where appropriate.

The battery capacity recovery apparatus 100 according to this embodiment employs a lithium supplying material 22b that is capable of supplying lithium to the active material of the positive electrode or the negative electrode of the battery. The battery capacity recovery apparatus 100 further includes a potential difference adjuster that is electrically connected to the lithium supplying material 22b and the collector 22 of the negative electrode. As described above, the collector 22 of the negative electrode is connected to the negative electrode tab 32, and therefore the potential difference adjuster may be connected to the lithium supplying material 22b and the negative electrode tab 32. A potential difference between the lithium supplying material 22b and the negative electrode tab 32 is adjusted in accordance with the degree of the reduction in the battery capacity, or in other words the degree of the reduction in mobile lithium ions (adjustment step # 105). In so doing, the mobile lithium ions can be regulated finely and precisely. The degree of the reduction in the battery capacity may be estimated on the basis of the use time, the use history, the current value, the voltage value, and so on of the battery.

Further, in the first embodiment of the battery capacity recovery apparatus, the low potential member 22b must be provided with a reduction ability relative to the active material of the electrode layer and a lower oxidation reduction potential than the active material of the electrode layer. In this embodiment, however, a difference between the oxidation reduction potentials of the lithium supplying material 22b and the active material of the electrode layer can be adjusted by the potential difference adjuster, and therefore various materials can be used as the lithium supplying material 22b. For example, a positive electrode active material may be used.

This invention is not limited to the embodiments described above, and may be subjected to various amendments and modifications within the scope of the technical spirit thereof. Needless to mention, these amendments and modifications are included in the technical scope of this invention.

For example, in the example of the lithium ion secondary battery according to this invention, shown in FIG. 1, the electrodes are constituted by a positive electrode in which positive electrode layers are formed on either surface of a collector and a negative electrode in which negative electrode layers are formed on either surface of a collector. However, this invention is not limited thereto, and may instead be applied to a battery in which a positive electrode layer is formed on one surface of a collector and a negative electrode layer is formed on the other surface. In this case, when the insulation layer 22a and the low potential member 22b are provided on the surface formed with the positive electrode layer, the oxidation reduction potential of the low potential member 22b becomes lower than that of the active material of the positive electrode layer. Further, when the insulation layer 22a and the low potential member 22b are provided on the surface formed with the negative electrode layer, the oxidation reduction potential of the low potential member 22b becomes lower than that of the active material of the negative electrode layer. As a result, cations can be released into the electrolyte easily.

Further, the potential difference adjuster shown in FIG. 8 may be added to the battery capacity recovery apparatus 100 shown in FIG. 7.

Furthermore, the electrolyte filled into the injector 10 is not limited to a gel form, and similar effects are obtained with a liquid electrolyte (i.e. an electrolyte solution).
Moreover, the embodiments described above may be combined appropriately.

The present application claims priority to Japanese Patent Application No. 2010-161605 filed in Japan Patent Office on July 16, 2010, Japanese Patent Application No. 2010-210944 filed in Japan Patent Office on September 21, 2010, Japanese Patent Application No. 2011-144531 filed in Japan Patent Office on June 29, 2011, and Japanese Patent Application No. 2011-144541 filed in Japan Patent Office on June 29, 2011. The contents of these applications are incorporated herein by reference in their entirety.

## Claims

1. A lithium ion secondary battery comprising:
an outer covering material (30) that is filled with an electrolyte (40);
a collector (22) that is housed in the outer covering material (30), formed with an electrode layer (221a, 222a) containing an active material, and electrically connected with the electrode layer;
an insulation layer (22a) that is provided on the collector (22); and
a low potential member (22b) that is provided on the insulation layer (22a), has a lower oxidation reduction potential than the active material of the electrode layer (221a, 222a), and possesses a reduction ability relative to the active material.

2. The lithium ion secondary battery as defined in Claim 1,
wherein the low potential member (22b) is lithium metal or a compound containing lithium.

3. The lithium ion secondary battery as defined in Claim 1 or Claim 2,
wherein the low potential member (22b) is arranged in a plurality on the insulation layer (22a).

4. A battery capacity recovery apparatus comprising:
a low potential member (22b) that has a lower oxidation reduction potential than an active material of a positive electrode (221) or a negative electrode (222) of a battery and possesses a reduction ability relative to the active material; and
an injector having a cylinder chamber (11a) that accommodates the low potential member (22b) and is capable of holding a filled electrolyte, and a conductive injection nozzle (13) that is formed continuously with the cylinder chamber (11a) and electrically connected with the low potential member (22b).

5. The battery capacity recovery apparatus as defined in Claim 4,
further comprising a potential difference adjuster that is connected with the low potential member (22b) and the positive electrode (221) or the negative electrode (222) of the battery in order to adjust a potential difference therebetween.

6. A battery capacity recovery apparatus comprising:
a lithium supplying material (22b) capable of supplying lithium to an active material of a positive electrode (221) or a negative electrode (222) of a battery;
an injector having a cylinder chamber (11a) that accommodates the lithium supplying material (22b) and is capable of holding a filled electrolyte, and a conductive injection nozzle (13) that is formed continuously with the cylinder chamber (11a) and electrically connected with the lithium supplying material (22b); and
a potential difference adjuster that is connected with the lithium supplying material (22b) and the positive electrode (221) or the negative electrode (222) of the battery in order to adjust a potential difference therebetween.

7. The battery capacity recovery apparatus as defined in any one of Claim 4 to Claim 6,
wherein the injection nozzle (13) of the injector (10) is capable of penetrating an outer covering material (30) of the battery so as to be short-circuited to a collector (22) of the battery, and is capable of injecting the electrolyte in the cylinder chamber (11a) into an interior of the outer covering material (30).

8. The battery capacity recovery apparatus as defined in any one of Claim 4 to Claim 7,
wherein the low potential member (22b) or the lithium supplying material (22b) is lithium metal or a compound containing lithium.

9. A battery capacity recovery method comprising:
an initial step (#101) of electrically insulating a collector (22) that is housed in an outer covering material (30) that is filled with an electrolyte, formed with an electrode layer (221a, 222a) containing an active material, and electrically connected with the electrode layer (221a, 222a) from a low potential member (22b) that has a lower oxidation reduction potential than the active material of the electrode layer (221a, 222a) and possesses a reduction ability relative to the active material;
a determination step (#102) of determining whether or not a battery capacity of a battery needs to be recovered; and
a short-circuiting step (#103) of short-circuiting the low potential member (22b) to the collector (22) when the battery capacity needs to be recovered.

10. The battery capacity recovery method as defined in Claim 9,
wherein, in the short-circuiting step (#103), the low potential member (22b), which is provided on an insulation layer (22a) formed on the collector (22), is pressed so as to be short-circuited to the collector (22).

11. The battery capacity recovery method as defined in Claim 9 or Claim 10,
wherein, in the short-circuiting step (#103), a plurality of the low potential members (22b) provided on the insulation layer (22a) formed on the collector (22) are pressed in a number corresponding to a degree of a reduction in the battery capacity so as to be short-circuited to the collector (22).

12. The battery capacity recovery method as defined in Claim 9,
wherein, in the short-circuiting step (#103), an injection nozzle (13) of a conductive injector (10) that is electrically connected with the low potential member (22b) is caused to penetrate the outer covering material (30) of the battery so as to be short-circuited to the collector (22),
the battery capacity recovery method further comprising an electrolyte ejection step (#104) of injecting an electrolyte held in a cylinder chamber (11a) of the injector (10) together with the low potential member (22b) into the interior of the outer covering material (30) of the battery.

13. The battery capacity recovery method as defined in Claim 12,
further comprising an adjustment step (#105) of adjusting a potential difference between the low potential member (22b) and a positive electrode (221) or a negative electrode (222) of the battery using a potential difference adjuster connected thereto in accordance with a degree of a reduction in the battery capacity.

14. The battery capacity recovery method as defined in Claim 12,
wherein the low potential member (22b) is a lithium supplying material (22b) capable of supplying lithium to the active material,
the battery capacity recovery method further comprising:
an electrolyte ejection step (#104) of injecting the electrolyte held in the cylinder chamber (11a) of the injector (10) together with the lithium supplying material (22b) into the interior of the outer covering material (30) of the battery; and
an adjustment step (#105) of adjusting a potential difference between the lithium supplying material (22b) and a positive electrode (221) or a negative electrode (222) of the battery using a potential difference adjuster connected thereto in accordance with a degree of a reduction in the battery capacity.
